# EUROPÄISCHE PATENTSCHRIFT

(11) **EP 1 766 751 B1**
(45) Veröffentlichungstag und Bekanntmachung des Hinweises auf die Patenterteilung: **20.03.2013**
(21) Anmeldenummer: 05774936.8
(22) Anmeldetag: 21.06.2005
(51) Int. Cl.: H02J 3/36

(54) **VERFAHREN ZUR HOCHSPANNUNGSGLEICHSTROMÜBERTRAGUNG**
HIGH-VOLTAGE DIRECT-CURRENT TRANSMISSION METHOD
PROCÉDÉ DE TRANSPORT DE COURANT CONTINU A HAUTE TENSION

(30) Priorität: 05.07.2004 DE 102004033578
(43) Veröffentlichungstag der Anmeldung: 28.03.2007
(73) Patentinhaber: Siemens Aktiengesellschaft, 80333 München (DE)
(72) Erfinder: BRANDT, Dennis, St. Germain South, Manitoba R5A 1G2 (CA); MOHADDES, Mojtaba, Winnipeg, Manitoba R3P 2G5 (CA)
(86) Internationale Anmeldenummer: PCT/DE2005/001129
(87) Internationale Veröffentlichungsnummer: WO 2006/005293

(56) Entgegenhaltungen:
- US-A- 5 483 140
- ZEINELDIN H H ET AL: "Capacitor commutated contverter using an adaptive active capacitor for HVDC system" CCECE 2003. CANADIAN CONFERENCE ON ELECTRICAL AND COMPUTER ENGINEERING. MONTREAL, CANADA, MAY 4 - 7, 2003, CANADIAN CONFERENCE ON ELECTRICAL AND COMPUTER ENGINEERING, NEW YORK, NY : IEEE, US, Bd. VOL. 3 OF 3, 4. Mai 2003 (2003-05-04), Seiten 529-534, XP010653854 ISBN: 0-7803-7781-8
- BJORKLUND P-E ET AL: "BENEFITS OF USING CAPACITOR COMMUTATED CONVERTERS FOR HVDC SYSTEMS" POWER INTERNATIONAL, LINCOLN PUBLICATIONS, LONDON, GB, Bd. 44, Nr. 1, Januar 1998 (1998-01), Seiten 24-27, XP000752008 ISSN: 0950-1487

## Beschreibung

Die Erfindung betrifft ein Verfahren zur Hochspannungsgleichstromübertragung, bei dem Wechselstrom eines Energie speisenden mehrphasigen Wechselstromnetzes durch einen Gleichrichter gleichgerichtet wird, als Gleichstrom zu einem Wechselrichter übertragen wird und der Wechselrichter den Gleichstrom zur Versorgung eines mehrphasigen Verbrauchers in Wechselstrom überführt, wobei der Gleichrichter und der Wechselrichter Thyristorventile aufweisen und eine Steuerungseinheit die Thyristorventile des Wechselrichters in Abhängigkeit eines Taktsignals zündet.

Ein solches Verfahren ist aus dem Beitrag von Zeineldin, El-Saadany und Kazerani "Capacitor Commutated Converter Using An Adaptive Active Capacitor For HVDC System" CCECE 2003, Canadian Conference on Electrical and Computer Engineering, Montreal, Canada, 4.-7. Mai 2003 bereits bekannt. In dem besagten Artikel wird der Einfluss von Kondensatoren untersucht, die auf der Wechselspannungsseite eines Umrichters für die Hochspannungsgleichstromübertragung angeordnet sind. Dabei sind die besagten Kondensatoren in Reihe zwischen Wechselspannungsnetz und Umrichter geschaltet. Die Regelung des Umrichters erfolgt auf die vorbekannte Art und Weise.

In dem "Guide For Planning DC Links Terminating AC DC Systems Locations Having Low Short-Circuit Capacities" der CIGRE Working Group 14.07 und IEEE Working Group 15.05.05, Cigre, Paris, aus dem Jahre 1992 sind Hochspannungsgleichstromübertragungssysteme offenbart, wobei ein Gleichspannungskreis Wechselstrom führende Energieverteilungsnetze miteinander verbindet. Hierbei sind Stromrichterstationen mit dem jeweiligen Drehspannungsnetz verbunden und dienen zum Gleich- oder Wechselrichten des Stromes. Die Stromrichter weisen in Brückenschaltungen miteinander verbundene Leistungshalbleiterventile auf, wobei üblicherweise Thyristoren zum Einsatz gelangen. Thyristoren weisen gegenüber anderen Leistungshalbleitern wie die so genannten GTO's oder IGBT's eine wesentlich geringere Verlustleistung auf und sind darüber hinaus kostengünstig in ihrer Herstellung.

Den Thyristoren haftet hingegen der Nachteil an, dass diese zwar durch ein elektrisches Zündsignal von einer Sperrstellung, in der ein Stromfluss durch die Thyristoren unterbrochen ist, in eine Durchlassstellung überführbar sind, in der ein Stromfluss durch die Thyristorventile ermöglicht ist. Ein Ausschalten der Thyristorventile durch Zündsignale ist jedoch nicht möglich. Erst wenn der durch den Thyristor fließende Strom unter dessen Haltestrom abfällt, wird der Thyristor wieder in seine Sperrstellung überführt. Thyristoren werden daher als fremd- oder netzgeführte Leistungshalbleiter bezeichnet. Bei der üblichen Hochspannungsgleichstromübertragung sind zwei über einen Gleichstromkreis verbundene Stromrichter mit jeweils einem Wechselstromnetz verbunden. Dabei sorgt die Drehspannung des Wechselstromnetzes beim als Wechselrichter betriebenen Stromrichter für die Kommutierung des Stromes am wechselstromseitigen Ausgang des Wechselrichters und somit für die Überführung der nicht mehr gezündeten Thyristoren von ihrer Durchlass- in ihre Sperrstellung. Zur Energieversorgung so genannter Inselnetze, die keine eigene Spannungsquelle aufweisen und somit keine Drehspannung zur Kommutierung des Stromes bei der Hochspannungsgleichstromübertragung zur Verfügung stellen können, sollten - so die bisherige Fachmeinung - Hochspannungsgleichstromübertragungssysteme mit selbstgeführten Leistungshalbleitern, wie beispielsweise IGBTs, eingesetzt werden. IGBTs sind jedoch kostenintensiv und weisen hohe Verlustleistungen auf, die während des Betriebs ebenfalls Kostennachteile gegenüber Thyristoren im Gefolge haben.

Aufgabe der Erfindung ist es daher, ein Verfahren der eingangs genannten Art bereitzustellen, mit denen eine Stromversorgung auch von so genannten Inselnetzen oder sonstigen Verbrauchern oder Lasten ermöglicht, die keine eigene Spannungsquelle aufweisen.

Die Erfindung löst diese Aufgabe dadurch, dass ein Taktgeber mit unabhängiger und eigener Energieversorgung das Taktsignal erzeugt und auf der Wechselstromseite des Wechselrichters eine zur Kommutierung des Stromes ausreichende kapazitive Impedanz bereitgestellt wird. Darüber hinaus wird die auf der Wechselstromseite des Wechselrichters auftretende Wechselspannung nur mittels des Gleichrichters geregelt. Wie bereits ausgeführt wurde, wird erfindungsgemäß auf eine Regelung des Wechselrichters verzichtet. Die an der wechselstromseitigen des Wechselrichters abfallende Drehspannung ist von den dortigen Impedanzen, aber auch von der Größe des Wechselstroms abhängig. Der Wechselstrom und somit die Wechselspannung kann jedoch durch den Gleichstrom und somit durch die Regelung des Gleichrichters bestimmt werden.

Erfindungsgemäß ist die Energieversorgung von Inselnetzen oder sonstigen passiven Verbrauchern mittels Thyristorventilen ermöglicht. Mit anderen Worten können passive Verbraucher ohne eigene Kommutierungsspannung über eine Hochspannungsgleichstromübertragungsanlage, deren Stromrichter Thyristorventile aufweisen, mit der Energie eines speisenden Verbundnetzes versorgt werden. Die zur Kommutierung des Stromes notwendige Spannung wird ausschließlich mittels kapazitiver Impedanzen bereitgestellt, die in Richtung des Leistungsflusses dem Wechselrichter nachgeschaltet sind. Zusätzliche Leistungshalbleiterventile in parallelen Kommutierungszweigen oder aktiv löschbare Ventile sind erfindungsgemäß überflüssig. So ist es beispielsweise erfindungsgemäß möglich, am

wechselstromseitigen Ausgang des Wechselrichters die einzelnen Phasen über Kondensatoren miteinander zu verbinden. Der Zeitpunkt der Zündung, beispielsweise der ersten Phasen, erfolgt nur in Abhängigkeit des Taktsignals, das von dem unabhängigen Taktgeber erzeugt wird. Hierbei wird nicht nur die zwischen den Strom führenden Phasen liegende Kapazität, sondern auch die beiden über die nicht Strom führende Phase verbundenen Kapazitäten aufgeladen. Diese sorgen nach dem Zünden des nächsten Thyristors für die notwendige Kommutierungsspannung.

Dies führt zu einem Stromanstieg in dem neu gezündeten Ventil und zu einem Absinken des Stromes unter den Haltestrom in dem Ventil, das verlöschen soll. Dieses Thyristorventil wird daher wieder in seine Sperrstellung überführt. Erfindungsgemäß erfolgt keine Regelung des Wechselrichters. Die Zündung der Thyristorventile erfolgt lediglich anhand der Phase des von der Drehspannung am Wechselrichter unabhängigen Taktsignals. Durch die Erfindung wird daher ein lange bestehendes Vorurteil überwunden, nämlich, dass Thyristorventile bei der Versorgung passiver Verbraucher bei der Hochspannungsgleichstromübertragung ungeeignet sind.

Es ist keineswegs notwendig, die kapazitiven Impedanzen durch Kondensatoren zwischen den Phasen des Verbrauchers zu realisieren. Die kapazitiven Impedanzen können auf beliebige Art und Weise bereitgestellt werden. Auch kann der Verbraucher selbst eine kapazitive Impedanz bereitstellen, mit der gemäß der vorliegenden Erfindung ebenfalls eine Kommutierung des Stromes ermöglicht ist. Die kapazitive Impedanz des Verbrauchers kann auch zu einer Impedanz hinzutreten, die von speziellen Kondensatorbänken erzeugt wird.

Grundsätzlich kann jeder zweckmäßige Taktgeber im Rahmen der Erfindung eingesetzt werden. Vorteile ergeben sich jedoch, wenn der Taktgeber ein freischwingender Oszillator ist. Freischwingende Oszillatoren sind dem Fachmann bestens bekannt, so dass an dieser Stelle hierauf nicht eingegangen zu werden braucht.

Zweckmäßigerweise werden die kapazitiven Impedanzen durch wenigstens eine Kondensatorbank bereitgestellt. Durch die Kondensatorbänke ist eine im Wesentlichen von dem Verbraucher unabhängige Auslegung der erfindungsgemäßen Vorrichtung ermöglicht, da durch die Kondensatorbänke sichergestellt werden kann, dass in jedem Fall die notwendigen Kapazitäten zur Kommutierung des Stromes bereitgestellt sind. Hierzu sind die Kapazitäten der Kondensatoren entsprechend auszulegen.

Zweckmäßigerweise sind die Kondensatorbänke zwischen dem Wechselrichter und dem Versorgungsanschlussterminal in Parallelschaltung zum Verbraucher geschaltet. Durch diese ortsnahe Anordnung der Kondensatorbänke am Wechselrichter ist die kapazitive Wirkung am größten. Dies führt zu einer schnelleren Kommutierung und somit zu kürzeren Überlappungswinkeln beim Wechselrichten.

Zweckmäßigerweise ist der mehrphasige Verbraucher ein Inselnetz, das keine eigene Spannungsquelle aufweist. Inselnetze sind beispielsweise auf Hochseeplattform vorzufinden, die beispielsweise zum Ölbohren eingesetzt werden.

Abweichend davon kann der Verbraucher jedoch auch ein einfacher Elektromotor sein und/oder aus einer oder einer Anzahl sonstiger elektrischer Maschinen bestehen.

Zweckmäßigerweise weist der Gleichstromzwischenkreis Gleichstromleiter mit einer Länge von über 30 Kilometern auf. Solche Hochspannungsgleichstromübertragungssysteme dienen vorzugsweise für die Energieversorgung von entfernten Inselnetzen, die von dem Verbundnetz weit beabstandet sind.

Abweichend hiervon sind Gleich- und Wechselrichter unmittelbar nebeneinander aufgestellt (back to back), so dass eine so genannte Kurzkupplung realisiert ist. Solche Kurzkupplungen dienen beispielsweise zur Kopplung von Wechselstromnetzen unterschiedlicher Drehfrequenz, Phasenlage, Sternpunktbehandlung oder dergleichen. Auch im Rahmen der Antriebstechnik ist eine solche Anordnung vorteilhaft.

Gemäß einer diesbezüglich zweckmäßigen Weiterentwicklung wird die auf der Wechselstromseite des Wechselrichters abfallende Wechselspannung unter Gewinnung einer Wechselmessspannung gemessen, die Wechselmessspannung wird mit einer Referenzspannung verglichen, in Abhängigkeit dieses Vergleichs wird dann ein Referenzgleichstromsignal erzeugt, der Strom des Gleichstromzwischenkreises unter Gewinnung eins Gleichstrommesssignals gemessen, das Gleichstrommesssignal mit dem Referenzgleichstromsignal verglichen, die Thyristorventile des Gleichrichters werden in Abhängigkeit dieses Vergleichs und so gezündet, dass sich die gewünschte Wechselmessspannung einstellt.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleichwirkende Bauteile mit gleichen Bezugszeichen versehen sind und wobei
- Figur 1: eine Verfahren benützt wird Vorrichtung, die bei dem erfindungsgemäßen
- Figur 2: die Wechselrichterseite einer Vorrichtung gemäß Figur 1 und
- Figur 3: eine schematische Darstellung zur Verdeutlichung eines Ausführungsbeispiels des erfindungsgemäßen Verfahrens zeigen.

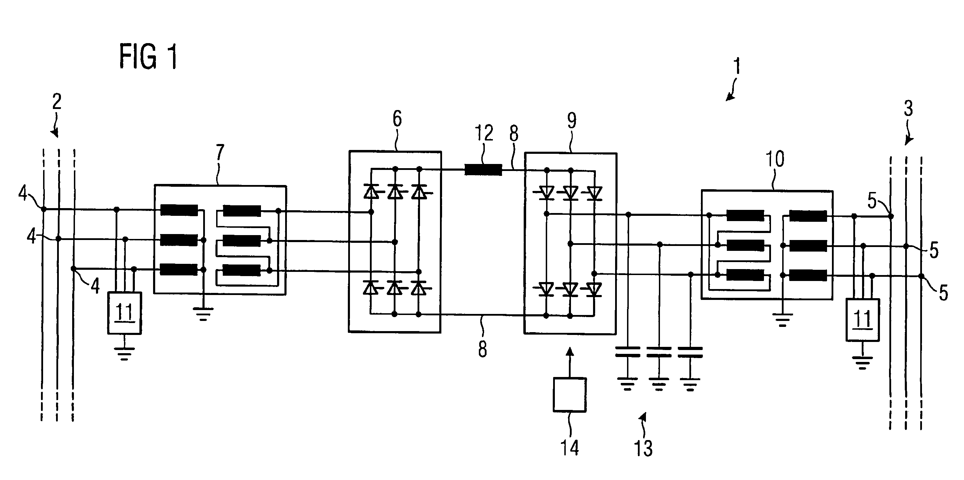

Figur 1 zeigt eine Vorrichtung 1, die zur Übertragung von Energie aus einem speisenden Wechselstromnetz 2 in ein Inselnetz 3 eingerichtet ist, das im Wesentlichen keine eigene Spannungsquelle aufweist. Dabei umfasst die Vorrichtung 1 ein Versorgungsanschlussterminal 4 zum Anschluss des speisenden Wechselstromnetzes 2 sowie einen Anschlussterminal 5 zum Anschluss des Verbrauchers, der hier als Inselnetz 3 realisiert ist. Dem Versorgungsanschlussterminal 4 ist ein Gleichrichter 6 nachgeschaltet, wobei zwischen Versorgungsanschlussterminal 4 und Gleichrichter 6 ein Transformator 7 angeordnet ist. Der Gleichrichter 6 ist über einen Gleichstromzwischenkreis 8 mit einem Wechselrichter 9 verbunden, dem ein weiterer Transformator 10 sowie das Verbraucheranschlussterminal 5 nachgeschaltet ist. Ferner sind als solche bekannte Filterbänke 11 vorgesehen, die auf Oberschwingungen der jeweiligen Nennfrequenzen der Drehspannung der Wechselstromnetze 2, 3 abgestimmt sind. Solche störende Oberschwingungen können beim Gleich- bzw. Wechselrichten auftreten. Durch die parallel zum jeweiligen Netz geschalteten Filter werden die Oberschwingungen wirksam unterdrückt. Im Gleichstromzwischenkreis 8 ist zur Glättung des Gleichstroms eine Induktivität 12 vorgesehen. Wechselstromseitig des Wechselrichters 9 sind in Parallelschaltung zum Inselnetz 3 Kondensatoren 13 angeordnet, die eine zur Kommutierung des Stromes ausreichende kapazitive Impedanz aufweisen. Zur Steuerung des Wechselrichters 9 ist eine Steuereinrichtung 14 vorgesehen, deren Wirkungsweise im Folgenden noch genauer beschrieben wird.

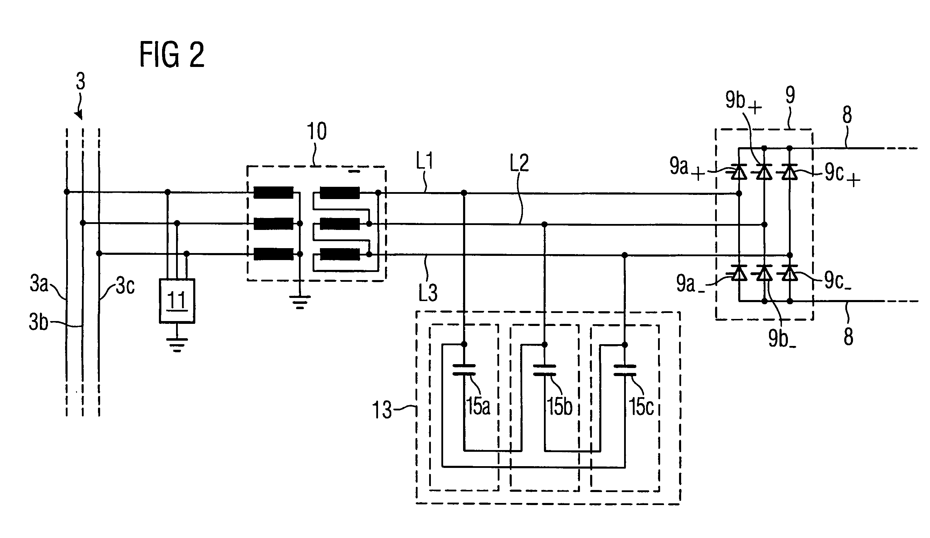

Figur 2 zeigt den Wechselrichter 9 in einer genaueren Darstellung. Insbesondere ist erkennbar, dass das Inselnetz 3 aus drei Phasen 3a, 3b, 3c besteht, die über den Transformator 10 mit dem Wechselrichter 9 verbunden sind. Der Wechselrichter 9 besteht im Wesentlichen aus zwei Kommutierungsgruppen mit den Thyristorventilen 9a₊, 9b₊, 9c₊ beziehungsweise 9a₋, 9b₋, 9c₋, die in einer Sechspulsbrückenschaltung miteinander verbunden sind. Den Phasen des Inselnetzes 3 zugeordnet sind Verbindungsleiter L1, L2 und L3. Weiter ist erkennbar, dass die Kondensatorbank 13 aus drei Kondensatoren (15a, 15b, 15c) besteht, die in einer Dreiecksschaltung mit den Verbindungsleitern L1, L2 und L3 verbunden sind. Der Start beginnt beispielsweise durch Zünden der Thyristoren 9a₊ und 9c₋. Der vom Gleichrichter erzeugte Gleichstrom lädt sowohl den direkt an den Strom führenden Phasen (L1 und L3) angeschlossenen Kondensator 15c als auch die beiden über die stromlose Phase L2 verbundenen Kondensatoren 15a und 15b auf. Beim Zünden des nächsten Thyristorzweiges (9b₊) sorgt die Spannung am Kondensator 15a für die notwendige Kommutierungsspannung, so dass der Strom vom Thyristor 9a₊ auf den Thyristor 9b₊ kommutiert. Auf diese Weise geht der Thyristor 9a₊ in seine Sperrstellung über. Die weiteren Kommutierungen erfolgen in gleicher Weise zeitversetzt.

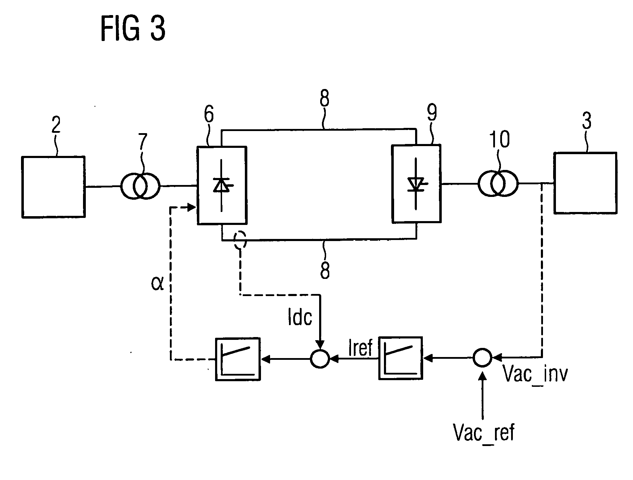

Figur 3 zeigt eine schematische Darstellung des erfindungsgemäßen Verfahrens. Insbesondere ist ein Versorgungsnetz 2 sowie ein Inselnetz 3 erkennbar, die über die bereits beschriebene Vorrichtung 1 miteinander verbunden sind. Wie bereits erläutert wurde, ist die Zündung der Thyristoren des Wechselrichters 9 lediglich von dem unabhängig erzeugten Taktsignal des bezüglich in Figur 3 nicht dargestellten Taktgebers abhängig. Eine Regelung des Wechselrichters erfolgt nicht. Zum Einstellen der Drehspannungen in dem Inselnetz 3 wird die Wechselmessspannung des Inselnetzes 3 beispielsweise mit Hilfe eines Spannungsteilers oder Wandlers gemessen. Die gemessene Wechselmessspannung Vac_inv wird anschließend mit einer parametrierten Soll- oder Referenzspannung Vac_ref verglichen, wobei mit Hilfe einer internen Logik in der Steuerungseinheit ein Sollstromwert oder ein Referenzgleichstromsignal Iref erzeugt wird. Die Impedanz des Inselnetzes 3 dient der besagten internen Logik als Parameter, mit dem diese das Gleichstromreferenzsignal berechnet. Das Referenzgleichstromsignal wird mit dem gemessenen Gleichstrom Idc verglichen und in Abhängigkeit des Vergleichs die Zündung des Gleichrichters 6 durch Variation des Zündwinkels α so verändert, dass die gemessene Wechselstromspannung Vac_inv dem Referenzwert Vac_ref entspricht.

## Patentansprüche

1. Verfahren zur Hochspannungsgleichstromübertragung bei dem Wechselstrom eines Energie speisenden mehrphasigen Wechselstromnetzes (3) durch einen Gleichrichter (6) gleichgerichtet wird, und als Gleichstrom zu einem Wechselrichter (9) übertragen wird, der Wechselrichter (9) den Gleichstrom zur Versorgung eines mehrphasigen Verbrauchers (3) in Wechselstrom überführt und, wobei der Gleichrichter und der Wechselrichter Thyristorventile (9a₊, 9b₊, 9c₊; 9a₋, 9b₋, 9c₋) aufweisen und eine Steuerungseinheit die Thyristorventile (9a₊, 9b₊, 9c₊; 9a₋, 9b₋ ,9c₋) des Wechselrichters (9) in Abhängigkeit eines Taktsignals zündet,
**dadurch gekennzeichnet, dass**
ein Taktgeber mit unabhängiger und eigener Energieversorgung das Taktsignal erzeugt, auf der Wechselstromseite des Wechselrichters (9) eine zur Kommutierung des Stromes ausreichende kapazitive Impedanz bereitgestellt wird und die auf der Wechselstromseite des Wechselrichters (9) auftretende Wechselspannung nur mittels des Gleichrichters (6) geregelt wird.

2. Verfahren nach Anspruch 1,
**dadurch gekennzeichnet, dass**
die auf der Wechselstromseite des Wechselrichters (9) auftretende Wechselspannung unter Gewinnung einer Wechselmessspannung (Vac_inv) gemessen wird, die Wechselmessspannung (Vac_inv) mit einer Referenzspannung (Vac_ref) verglichen wird in Abhängigkeit dieses Vergleichs ein Referenzgleichstromsignal (Iref) erzeugt wird, der Strom des Gleichstromzwischenkreises unter Gewinnung eines Gleichstrommesssignals (Idc) gemessen wird, das Gleichstrommesssignal (Idc) mit dem Referenzgleichstromsignal (Iref) verglichen wird, die Thyristorventile des Gleichrichters (6) in Abhängigkeit dieses Vergleichs und so gezündet werden, dass sich die gewünschte Wechselmessspannung (Vac_inv) einstellt.

## Claims

1. Method for high-voltage direct-current transmission in which alternating current from a polyphase alternating-current mains system (3) which feeds energy, is rectified by a rectifier (6) and is transmitted as direct current to an inverter (9), the inverter (9) converts the direct current to alternating current in order to supply a polyphase load (3), with the rectifier and the inverter having thyristor valves (9a₊, 9b₊, 9c₊; 9a₋, 9b₋, 9c₋), and a control unit triggering the thyristor valves (9a₊, 9b₊, 9c₊; 9a₋, 9b₋, 9c₋) in the inverter (9) as a function of a clock signal,
**characterized in that**
a clock transmitter with its own independent power supply produces the clock signal, a capacitive impedance which is sufficient for commutation of the current is provided, and on the alternating-current side of the inverter (9), the AC voltage which occurs on the alternating-current side of the inverter (9) is regulated only by means of the rectifier (6).

2. Method according to Claim 1,
**characterized in that**
the AC voltage which occurs on the alternating-current side of the inverter (9) is measured with an AC measurement voltage (Vac_inv) being obtained, the AC measurement voltage (Vac_inv) is compared with a reference voltage (Vac_ref) and a reference direct-current signal (Iref) is produced as a function of this comparison, the current in the direct-current intermediate circuit is measured with a direct-current measurement signal (Idc) being obtained, the direct-current measurement signal (Idc) is compared with the reference direct-current signal (Iref) and the thyristor valves in the rectifier (6) are triggered as a function of this comparison such that the desired AC measurement voltage (Vac_inv) is produced.

## Revendications

1. Procédé de transport de courant continu à haute tension, dans lequel on redresse par un redresseur ( 6 ) le courant alternatif d'un réseau ( 3 ) de courant alternatif polyphasé d'alimentation en énergie et on le transporte sous la forme d'un courant continu à un onduleur ( 9 ), l'onduleur ( 9 ) transforme en courant alternatif le courant continu pour l'alimentation d'un utilisateur ( 3 ) polyphasé, le redresseur et l'onduleur ayant des convertisseurs ( 9a+, 9b+, 9c+ ; 9a-, 9b-, 9c- ) à thyristor et une unité de commande amorce les convertisseurs ( 9a+, 9b+, 9c+ ; 9a-, 9b-, 9c- ) à thyristor de l'onduleur ( 9 ) en fonction d'un signal d'horloge,
**caractérisé en ce que**
une horloge à alimentation en énergie indépendante et propre produit le signal d'horloge du côté du courant alternatif de l'onduleur ( 9 ), une impédance capacitive suffisante pour la commutation du courant est mise à disposition et la tension alternative se produisant du côté du courant alternatif de l'onduleur ( 9 ) n'est régulée qu'au moyen du redresseur ( 6 ).

2. Procédé suivant la revendication 1,
**caractérisé en ce que**
la tension alternative se produisant du côté du courant alternatif de l'onduleur ( 9 ) est mesurée en obtenant une tension ( Vac_inv ) de mesure alternative, la tension ( Vac_inv ) de mesure alternative est comparée à une tension ( Vac_ref ) de référence, en fonction de cette comparaison, un signal ( Iref ) de courant continu de référence est produit, le courant du circuit intermédiaire de courant continu est mesuré en obtenant un signal ( Idc ) de mesure du courant continu, le signal ( Idc ) de mesure du courant continu est comparé au signal ( Iref ) de courant continu de référence, les convertisseurs à thyristor du redresseur ( 6 ) sont amorcés en fonction de cette comparaison et de manière à établir la tension ( Vac_inv ) de mesure alternative souhaitée.
